# EUROPEAN PATENT SPECIFICATION

(11) **EP 4 487 972 B1**
(45) Date of publication and mention of the grant of the patent: **25.03.2026**
(21) Application number: 24185344.9
(22) Date of filing: 28.06.2024
(51) Int. Cl.: B08B 15/04, B23K 9/16, B23K 9/32

(54) **FUME EXTRACTOR ATTACHMENT FOR A WELDING TORCH, AND FUME EXTRACTOR SYSTEM WITH SUCH ATTACHMENT**
RAUCHABZUGSAUFSATZTEIL FÜR EINEN SCHWEISSBRENNER, UND RAUCHABZUGSAUFSATZSYSTEM MIT EINEM SOLCHEN TEIL
ACCESSOIRE D'EXTRACTION DE FUMÉES POUR UNE TORCHE DE SOUDAGE, ET SYSTÉME D'EXTRACTION DE FUMÉES AVEC UN TEL ACCESSOIRE

(30) Priority: 28.06.2023 US 202363510784 P; 27.06.2024 US 202418755891
(43) Date of publication of application: 08.01.2025
(73) Proprietor: Illinois Tool Works Inc., Glenview IL 60025 (US)
(72) Inventor: KOPAC III, Jordan, Glenview, IL 60025 (US); GUSE, Matthew, Glenview, Il 60025 (US); LEGG, Marshall, Glenview, IL 60025 (US)
(74) Representative: HGF

(56) References cited:
- WO-A1-2021/030395
- DE-A1- 4 215 634
- JP-A- 2020 037 115
- JP-U- S 498 521
- JP-U- S49 138 122

## Description

The present invention relates generally to fume extraction, and more particularly to a fume extractor attachment for a welding torch, and a fume extractor system with such attachment, see claims 1 and 10.

### BACKGROUND

Welding operations result in substantial fumes which, if not captured, disperse into the local environment (e.g., room, building) in which the welding operations are occurring. Such fumes or other airborne components may dissipate, or be captured and filtered from the air.

Different types of fume extraction systems have been developed. Some types of fume extractors filter fume from ambient air, which generally requires the fumes to have dispersed into the local environment in which the filter is located. Some other types of fume extractors include localized collection devices, which can be positioned to collect air and fume from a more localized volume within which the fumes originate, thereby increasing capture efficiency. In the welding context, such localized fume extractors can be coupled or attached to a welding torch to generally follow a fume-producing arc welding operation, or can be positioned independently from the welding torch. JPS49138122U (describing the preamble of claims 1 and 10) relates to a tool for removing a harmful gas such as steam, dust and the like generated during welding. DE4215634A1 relates to a welding head suction device.

### SUMMARY

According to a first aspect of the present invention, a fume extractor attachment is defined in claim 1.

According to a second aspect of the present invention, a fume extractor system with such attachment is defined in claim 10.

Embodiments according to the first and second aspects of the present invention are defined in the dependent claims.

### BRIEF DESCRIPTION OF THE DRAWINGS

FIGS. 1A to 1C illustrate example robotic welding systems including a fume extraction attachment mounted to a welding torch.
FIGS. 2A to 2F provide examples of the fume extractor attachment 102 mounted to a manual welding torch types.
FIGS. 3A to 3E illustrate multiple views of an example fume extraction attachment.
FIGS. 4A to 4E illustrate multiple views of an example fume extraction attachement, not covered by the present invention.
FIG. 5 illustrates an example fume extraction system mounted along a neck of a welding torch.
FIG. 6 illustrates an example fume extraction system employing a grommet.
FIG. 7 illustrates an example fume extraction system employing a baffle.

The figures are not necessarily to scale. Where appropriate, similar or identical reference numbers are used to refer to similar or identical components.

### DETAILED DESCRIPTION

Disclosed example fume extractors provide improved fume at the point of fume generation extraction for welding torches. In disclosed examples, a fume extractor attachment is mounted onto the welding torch (e.g., a metal inert gas (MIG)), in which the fume extractor attachment enables fume extraction at a location adjacent to a nozzle of the welding torch, which captures and channels fumes for collection and filtering. Disclosed example fume extractor attachments enable an operator to modify a variety of torches to easily add fume source capture capabilities to a standard welding torch, thereby providing improved fume extraction efficiency by locating the fume extraction closer to the welding arc.

Fume capture in welding environments can be performed in a number of ways. Ambient systems are used to draw in fumes in an area around the weld site, often via tubing or manifolds that draw air into a vacuum source. Source capture systems can be implemented as a fume gun. A fume gun can be implemented as a MIG welding torch, with the addition of a source capture fume nozzle integrated into a portion of the welding torch. In such a torch, the fume nozzle is located just above the nozzle near the contact tip, which draws in fumes from the welding operation as soon as it is generated.

Such welding torches and fume source capture systems are effective and work as intended. However, such systems are typically fully integrated with a give torch, only compatible with large frame welding machines, and are expensive. Thus, if an operator sought source capture capabilities, the operator would need to buy an entire fume gun system compatible with specific machines.

The design of the disclosed fume extraction attachment addresses these challenges, providing an attachment that can be mounted to a variety of welding torches (e.g., a MIG welding torch), converting a standard welding torch into a fume capture torch. As explained herein, the fume extraction attachment can be made available at a fraction of the cost of previous fume extraction torches, and operators can use existing welding torches, power supplies, and vacuum systems.

Advantageously, the disclosed attachment can be mounted to a wide variety of welding torches, including type and/or brand of torch, and can be removed and re-mounted as needed. The design can be a consumable product, manufactured at a cost to allow for replacement as-needed. The fume extractor system can be connected to a wide variety of vacuum systems as well.

In disclosed examples, a fume extractor attachment for a welding torch, the fume extractor attachment including a body including a neck channel to receive a neck of a metal inert gas welding torch; a plurality of fume slots arranged at a first end of the body; a fume duct receiver arranged at a second end of the body opposite the first end; and a fume manifold providing fluid communication between the one or more fume slots and the fume duct receiver, the fume duct receiver being couplable to a fume hose.

According to the present invention, the channel has one or more curves.

In some examples, the plurality of fume slots are formed in a conical portion extending from the body toward a nozzle of the welding torch. In examples, the plurality of fume slots are arranged radially about the channel. In examples, the channel extends from the conical portion to an opening configured to receive the neck of the welding torch. In examples, the manifold extends into a space within the body and the conical portion that surrounds the channel.

In some examples, the channel is fluidly sealed from the fume manifold. In examples, the fume manifold comprises a material with a melting point above a predetermined threshold temperature. In examples, the material comprises one or more of a metal, a polymer, polyetheretherketone (PEEK), polyimide, or silicone.

In examples, the attachment is formed as a single unit.

In examples, the body comprises two or more pieces configured to be attached together to clamp onto the neck of the welding torch.

In examples, the fume extractor attachment includes one or more fasteners to fix a position or orientation of the fume extractor attachment relative to the welding torch.

In examples, the fume extractor attachment includes an insulator between one or more surfaces of the fume extractor attachment and the neck of the welding torch.

In some disclosed examples, a fume extractor system for a welding torch includes a vacuum system; a fume hose connected to the vacuum system; and a fume extractor attachment comprising: a body including a neck channel to receive a neck of a metal inert gas welding torch; a plurality of fume slots arranged at a first end of the body; a fume duct receiver arranged at a second end of the body opposite the first end; and a fume manifold providing fluid communication between the one or more fume slots and the fume duct receiver, the fume duct receiver being couplable to the fume hose.

In some examples, the welding torch is connected to a robotic welding arm.

In examples, the robotic welding torch is connected to one or more weld cables to deliver welding consumables from a welding power supply.

In examples, the fume extractor system includes a hose support to hold the fume hose.

In examples, the hose support is configured to move in at least one direction in response to movement of the fume hose.

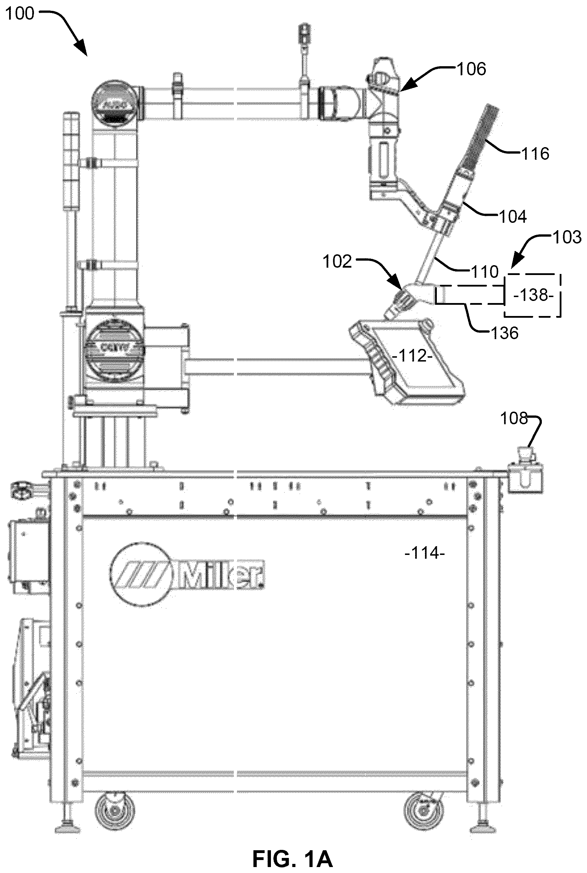

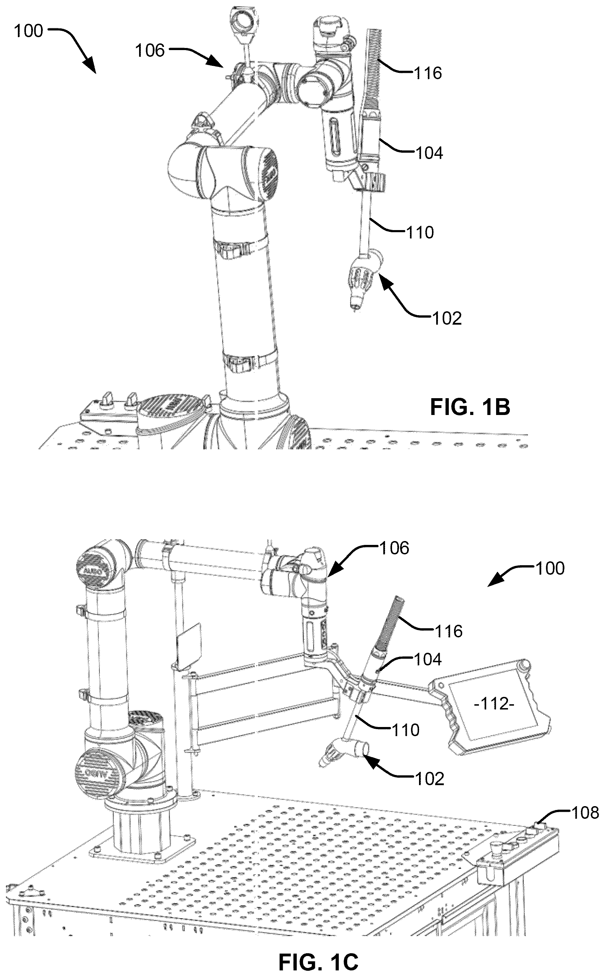

In some examples, the fume extractor system includes a grommet arranged between the fume extractor attachment and the neck of the welding torch to partially seal a space between the fume extractor attachment and the neck
FIGS. 1A to 1C illustrate an example robotic welding system 100 including a fume extraction attachment 102 mounted to a neck 110 of a welding torch 104. The example robotic welding system 100 includes a robotic manipulator 106, such as a through-arm type manipulator (e.g., cables are routed at least partially internally to the manipulator 106) or a conventional manipulator (e.g., cables are routed externally to the manipulator 106). The welding torch 104 is attached to the manipulator 106 for positioning the welding torch 104 during welding operations. A cable 116 (e.g., a unicable, weld cable) provides consumables (e.g., electrode wire, welding power, shielding gas, etc.) can connect the welding torch 104 to a welding power supply. The robotic welding system 100 can be mounted on a stand, rack, or work surface 114. A user interface 112 and/or one or more controls 108 may be provided to inform and/or allow the operator to control the robotic welding system.

Welding operations generate substantial fumes which, if not captured, disperse into the local environment (e.g., room, building) in which the welding operations occur. To effectively capture and dispose of welding fumes generated by the welding torch, a fume extraction system 103 is attached to the welding torch 104 to capture welding fumes close to the point of emission of the fumes. Because the fume extraction system 103 is attached to the welding torch 104, the fume extraction system 103 moves with the welding torch 104 as the manipulator 106 conducts the welding operations.

In the example shown in FIG. 1A, the fume extraction system 103 includes the fume extraction attachment 102 connected to a suction source or fume capture system 138 via a fume hose 136. The fume hose 136 communicates negative pressure from the fume capture system 138 to the fume extraction system 102, and directs captured fume from the fume extraction system 103 to the fume capture system 138. Robotic manipulators and, in particular, through-arm robotic manipulators 106 are capable of significant rotation of the welding torch 104 during welding operations. Conversely, the fume capture system 108 is typically stationary. The example fume extraction system 103 allows the fume hose 136 to remain attached to the fume extraction attachment 102 while the welding torch 104 is moved and rotated during welding operations. The fume attachment 106 communicates a negative pressure from the fume hose 110 (e.g., from the fume capture system 138) to a workspace closest to the nozzle 118.

Additionally or alternatively, disclosed fume extractor attachments may be adapted for multiple different types of robotic welding torches and/or robotic manipulators, which may include welding torches having liquid cooling lines extending along the neck. Disclosed example fume extractor attachments are easily installed and removed from the welding torch, reducing downtime of the robotic welding system to install, remove, and/or replace components of the fume extractor system.

To reduce or prevent damage to the nozzle assembly, neck, welding torch, and/or robot caused by such a collision, the cushion sections 1206 of the bumper 1104 deflect to absorb contact with the nozzle. For example, one, two, or more of the cushion sections 1206 resiliently deform in response to an external force applied to the rigid frame ring.

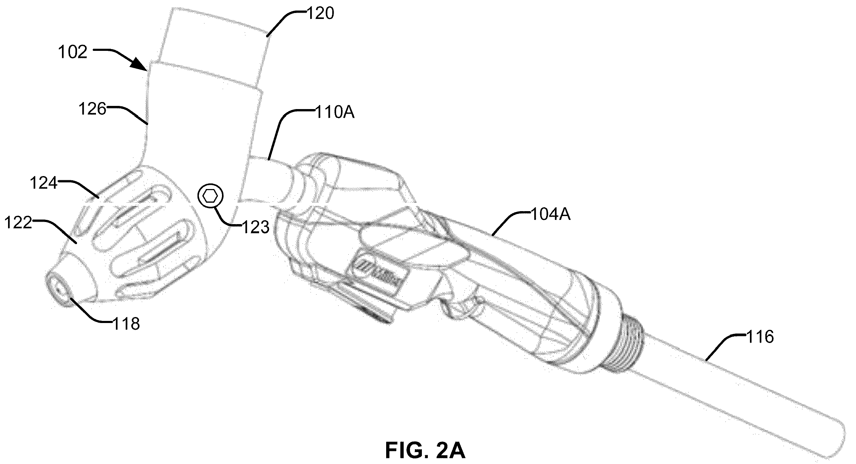

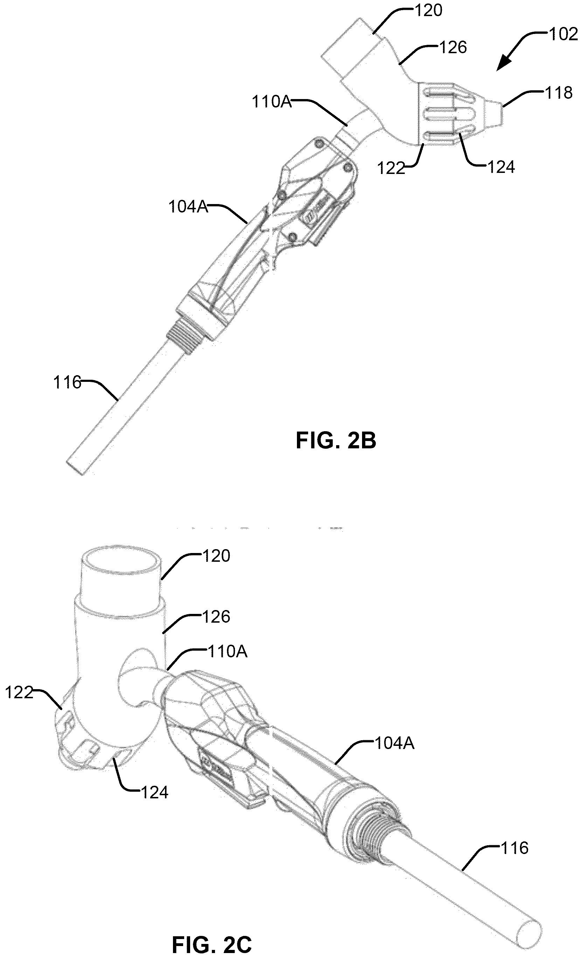

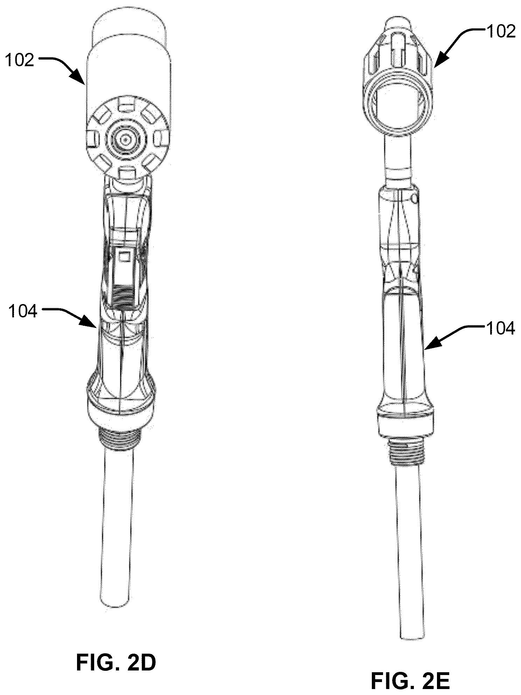

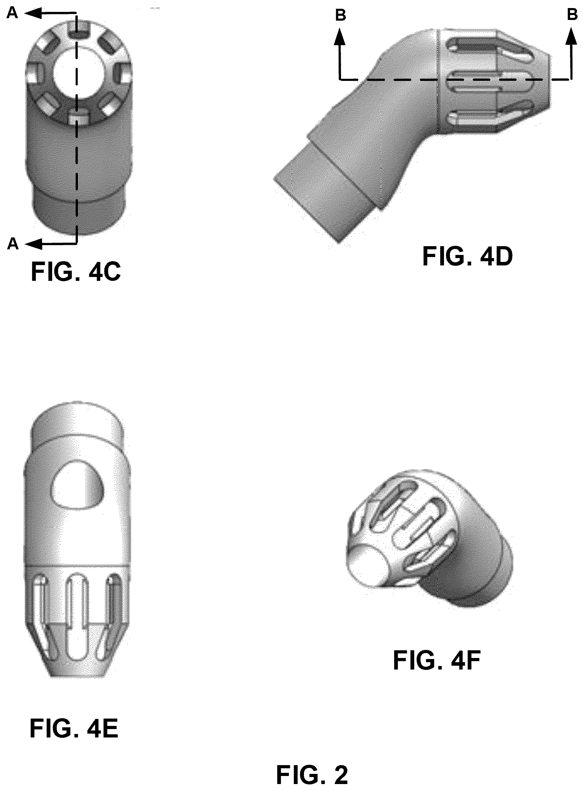

FIGS. 2A to 2E provide examples of the fume extractor attachment 102 mounted to a manual welding torch types, such as a MIG welding torch 104A. As shown, the fume extractor attachment 102 includes a body 126 with a first end having a conical portion 122 and a fume duct receiver 120 at a second end opposite the first end. The first end is arranged near a nozzle 118 of the torch 104A, to allow fumes to be captured through one or more slots 124. For example, the slots 124 are illustrated as being radially arranged about the neck 110A/nozzle 118, although other arrangements are considered. Such arrangements include a single slot, which can be oriented as illustrated or at different angles or sizes, and arranged at different positions about the conical portion 122.

Although the first end 122 is illustrated as having a generally conical shape, other shapes and/or designs are considered. Further, although the slots 124 are illustrated as having a generally oval shape, other shapes and/or designs (e.g., circles, triangles, rectangles, holes, etc.) are considered.

One or more fasteners 123 can be included on the fume extraction attachment 102 to fix a position or orientation of the attachment 102 relative to the torch 104A. Such fasteners 123 can include screws, clamps, retaining rings, bolts, clips, friction supports, or elastic bands, as a list of non-limiting examples. Such fasteners 123 can be located within the body 126 (e.g., a friction support at an interface between the neck 110A and an inside surface of the body 126), through a wall of the attachment 102 (e.g., a screw), and/or arranged about the body 126 to fix the position/orientation of the attachment 102 relative to the neck 110A.

In some examples, the fasteners 123 includes one or more internal features at the interface between the attachment 102 and the welding torch. Such internal features may include vanes or baffles, which may retain the attachment 102 in a concentric position relative to the neck 110 of the welding torch 104.

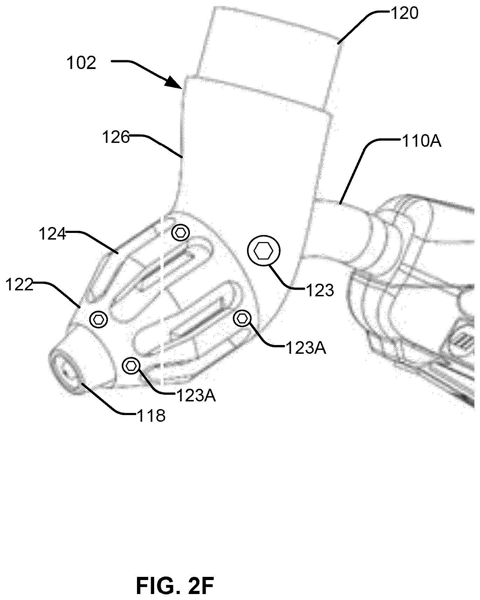

In some examples, as shown in FIG. 2F, one or more fasteners 123A may be located on or near the first end 122. This may be in addition to or to substitute the fastener 123. For instance, the fasteners 123A may be arranged in multiple positions encircling the neck 110, which can be individually tightened to fix the position of the attachment 102 relative to the torch.

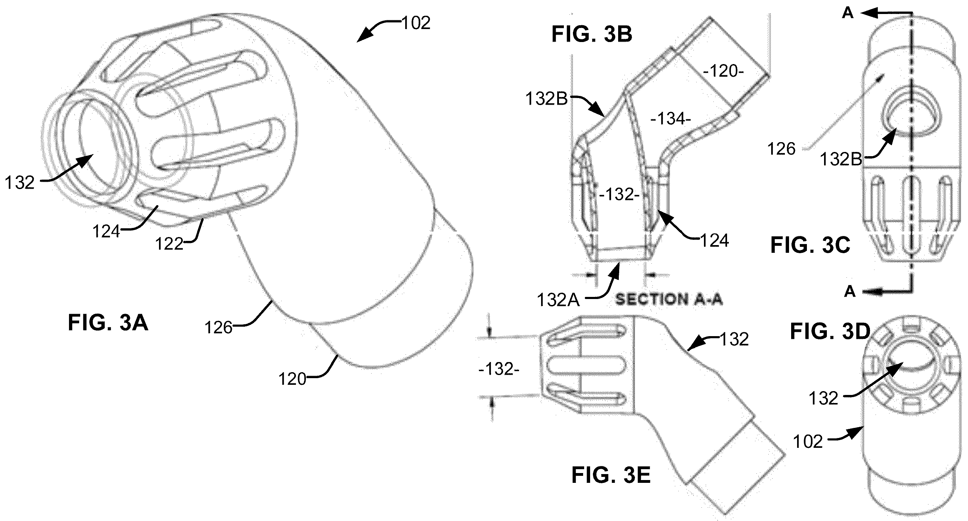

FIGS. 3A to 3E illustrate multiple views of an example fume extraction attachment 102. The fume extraction attachment 102 includes a channel 132 within the attachment to receive the neck 110 of the welding torch 104. As shown, the channel 132 is defined by an opening 132A within the conical portion 122 near the nozzle/contact tip of the welding torch, extending through the body 126 to another opening 132B. The channel 132 is designed to follow a curvature in the neck 110 of the welding torch 104 to position the intake of the fume extraction system 103 in an advantageous position near the nozzle, even as the welding torch 104 is moved and rotated during welding operations.

In the example of FIG. 3B, the channel 132 is surrounded by a manifold 134, which provides fluid communication between the fume slots 124 and the fume duct receiver 120. The body 126 and/or the conical portion 122 may fully surround the channel 132, while in some examples the manifold 134 may follow one or more direct paths between the fume slots 124 and the fume duct receiver 120.

The illustrated dimensions of the disclosed attachments can be modified for a specific torch type, application, and/or fixturing technique. For example, if fasteners are not used, a smaller channel may be used to more securely position the attachment on the neck. A larger channel can be used for larger neck diameters, but also for mounting to a variety of neck diameters. The inlet and/or channel angle relative to the fume duct receiver 120 may be modified for a specific torch and/or application (e.g., 30, 45, 60, 90 degrees, etc.).

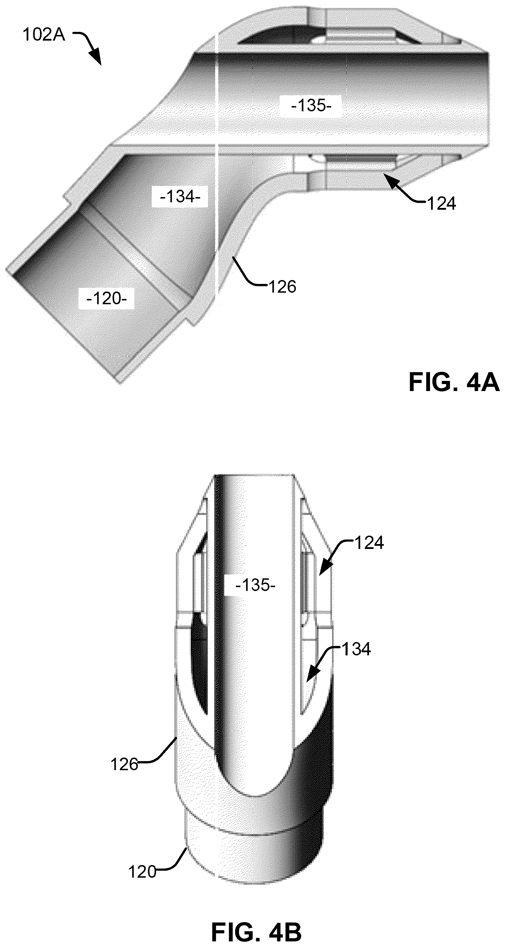

FIGS. 4A to 4E illustrate a fume extraction attachment 102A (not covered by the present invention), where the channel 135 is substantially straight. The fume extraction attachment 102A of FIG. 4A is a cross-sectional view of the attachment of FIG. 4C along line A-A, and FIG. 4B is a cross-sectional view of the attachment of FIG. 4D along line B-B. As shown in FIG. 4B, the manifold 134 creates a fluid communication pathway between the slots 124 and the fume duct receiver 120.

The disclosed attachments can be formed of a heat resistant material suitable for welding conditions, such as one or more of a metal, a polymer, polyetheretherketone (PEEK), polyimide, or silicone, as a list of non-limiting examples. In some examples, the material is selected to reduce an amount of spatter that collects on the attachment during a welding operation, and/or is able to be cleaned after the welding operation. In some examples, the attachment includes an insulator, which may be incorporated as a layer (e.g., on one or more surfaces of the attachment), and/or separately formed and mated to the attachment. The insulator may be removable, such that the insulator (or other layer) may be placed on an exposed surface of the attachment, thereby ensuring the attachment is protected (e.g., from heat and splatter), and can be removed following the welding operation. The insulation material can include one or more of glass, silicon, PEEK, or metal, as a list of non-limiting examples. Them attachment can be made as a rigid or a flexible device, can be formed as a single unit (e.g., by injection molding and/or 3D printing techniques), or as multiple pieces that can be assembled to mount to the welding torch. The pieces may be connected by one or more screws or other fasteners, by a hinge and clamp, multiple clamps, retaining rings, clips, and/or any other method of connecting the pieces.

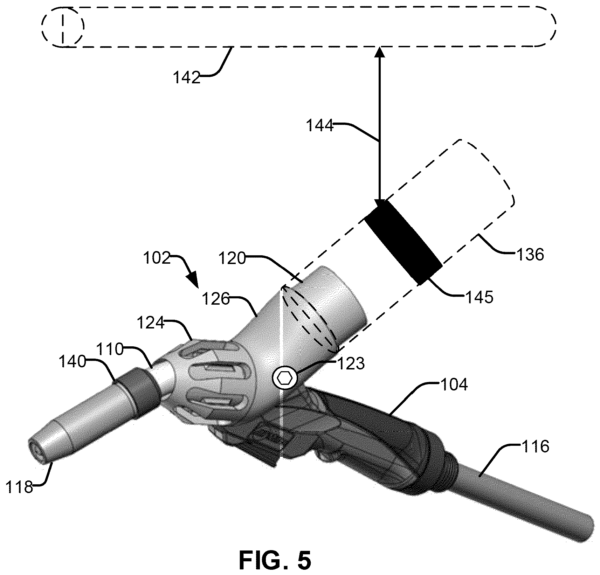

FIG. 5 illustrates the fume extraction system 102 being mounted along the neck 110 of the welding torch 104. As shown, the attachment 102 is arranged with the neck 110 within the interior channel 132. To mount the attachment to the neck 110, the holes 132A, 132B and the channel 132 may be sized large enough to slide the attachment over the nozzle 118. In some examples, the nozzle 118 (and/or one or more other attachments 140) may be removed, the attachment arranged on the neck 110, and the nozzle 118 is replaced. Once mounted to the neck 110, a position and/or orientation of the attachment 102 can be fixed by one or more fasteners 123.

Additionally or alternatively, fume hose 136 can be supported by a hose support system that includes a hose support frame 142, a hose support cable 144, and a hose clamp 145. In some examples, the support frame 142 can be movable to follow movement of the welding torch 104. The support cable 144 can be a material or structure (e.g., elastic, a pulley, etc.) to maintain the hose at a level above the work piece or work surface 114). The example hose support system lessens the likelihood of collisions between the fume extraction system 102 and external objects, such as a workpiece, fixturing, or welding table 114.

As shown, the example fume hose 136 is coupled to the fume duct receiver 120, connected to a cylindrical mounting surface of fume duct receiver 120 using, for example, a hose clamp. In other examples, the outer diameter of the fume duct receiver 120 may be larger than an inner dimeter of the fume hose 136, and the fume hose 136 is stretched over the mounting surface of the fume duct receiver 120 and is retained by compression. Example materials for the fume hose 136 may include a flexible material and may be constructed using a preformed spring wrapped in a fabric or other material that is flexible and resistant to welding-related heat and flame.

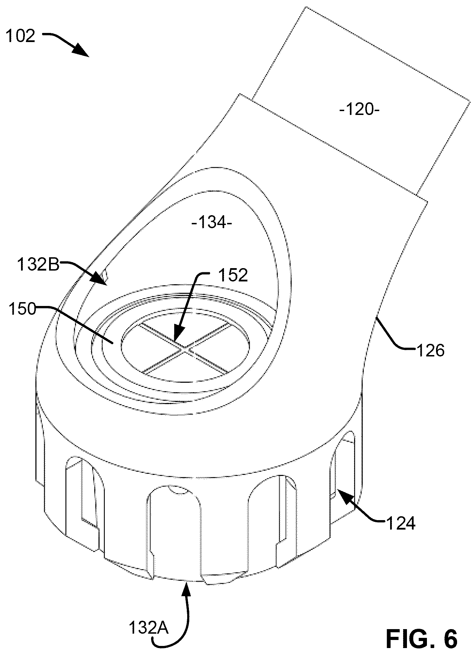

**In** the example of FIG. 6, the fume extractor attachment 102 may include a grommet 150 (e.g., washer, insulating material, loop, cap, etc.) to partially seal a space between the welding torch 104 (e.g., a surface of the neck 110) and the attachment 102 at the opening 132B of channel 132. The neck 110 may be inserted through the grommet 150 through an opening or cutaway 152. The cutaway 152 may be a opening, similar to an O-ring, or may be a slit cut into the material across the opening 132B. Such a slit may be a single, linear slit, or may be a two, perpendicular slits across the material, as shown in FIG. 6.

**In** some examples, the grommet 150 is wrapped around the neck, with the attachment body being clamped on before or after placement of the grommet. The grommet 150 may be formed of a single piece of material or a combination of two or more materials, including a polymer, silicon, silicone, rubber, polyetheretherketone (PEEK), polyimide, metal, or carbon, as a list of non-limiting examples. As a result, grommet 150 forms a ring about the neck, thereby sucking the air into the attachment 102 via the slots 124, concentrating exhaust and increasing airflow of welding fumes away from the welding site.

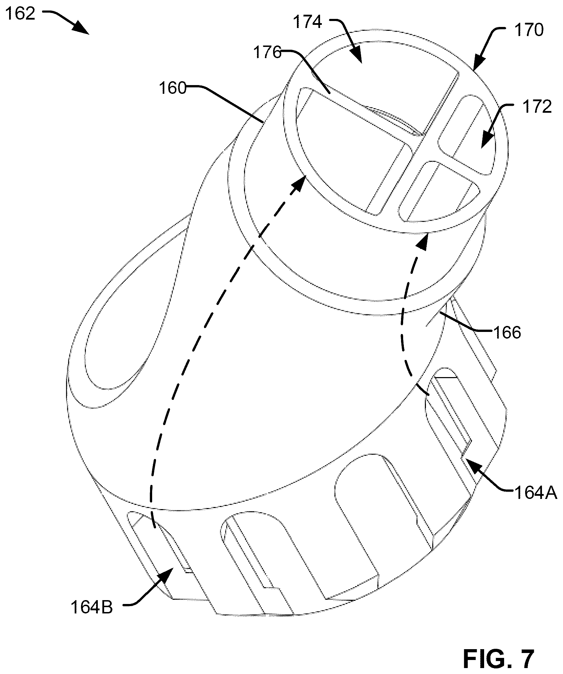

In the example of FIG. 7, a fume extraction attachment 162 may include a baffle 170 at an interface between the attachment 162 and a hose of the fume extraction system. As shown, the baffle 170 is arranged within an extension or coupling 160 that is configured to receive the hose. The baffle 170 includes one or more vanes or partitions 176 to create one or more pathways between the slots and the hose.

As shown, the partitions 176 are arranged to create pathways that promotes airflow evenly about the attachment 162. For example, a first, smaller pathway 172 is connected to first, closer slots 164A. The airflow travels a shorter distance from slot 164A through the first pathway 172 to the hose, in comparison to the airflow pathway from second, farther slots 164B. Thus, slots 164B channel airflow through the second, larger pathway 174 and then into the hose. This arrangement promotes a more even suction profile about the attachment 162, and therefore at the welding site.

In some examples, the baffle 170, and/or the coupling 160 in its entirety, is removable. In some examples, the baffle 170 is formed as an integral part of the assembly 162, which may include formation of the first and second pathways to the respective slots. Although two pathways of each type are shown, the baffle may be designed to form a single pathway, or three or more pathways (e.g., four, five, six, seven, eight, nine, ten or more pathways). In some examples, each slot 164A and/or 164B may have a dedicated pathway.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present fume extractor attachment and system have been described with reference to certain implementations, it will be understood by those skilled in the art that various changes may be made and equivalents may be substituted without departing from the scope of the presentinvention as defined in the appended claims.

## Claims

1. A fume extractor attachment (102) for a welding torch (104), the fume extractor attachment (102) comprising:
a body including a neck channel (132) to receive a neck (110) of a metal inert gas welding torch;
a plurality of fume slots (124) arranged at a first end of the body;
a fume duct receiver arranged at a second end of the body opposite the first end; and
a fume manifold (134) providing fluid communication between the one or more fume slots (124) and the fume duct receiver, the fume duct receiver being couplable to a fume hose;
**characterised in that** the channel (132) has one or more curves.

2. The fume extractor attachment (102) as defined in claim 1, wherein the plurality of fume slots (124) are formed in a conical portion extending from the body toward a nozzle (118) of the welding torch.

3. The fume extractor attachment (102) as defined in claim 2, wherein the plurality of fume slots (124) are arranged radially about the channel (132).

4. The fume extractor attachment (102) as defined in claim 2, wherein the channel (132) extends from the conical portion to an opening configured to receive the neck (110) of the welding torch.

5. The fume extractor attachment (102) as defined in claim 2, wherein the manifold (134) extends into a space within the body and the conical portion that surrounds the channel (132).

6. The fume extractor attachment (102) as defined in claim 1, wherein the channel (132) is fluidly sealed from the fume manifold (134).

7. The fume extractor attachment (102) as defined in claim 1, wherein the fume manifold (134) comprises a material with a melting point above a predetermined threshold temperature, and optionally
wherein the material comprises one or more of a metal, a polymer, polyetheretherketone (PEEK), polyimide, or silicone.

8. The fume extractor attachment (102) as defined in claim 1, wherein the attachment is formed as a single unit, or
wherein the body comprises two or more pieces configured to be attached together to clamp onto the neck (110) of the welding torch.

9. The fume extractor attachment (102) as defined in claim 1, further comprising one or more fasteners to fix a position or orientation of the fume extractor attachment (102) relative to the welding torch, or
the fume extractor attachment (102) further comprising an insulator between one or more surfaces of the fume extractor attachment (102) and the neck (110) of the welding torch.

10. A fume extractor system (103) for a welding torch (104) comprising:
a vacuum system;
a fume hose connected to the vacuum system; and
the fume extractor system being **characterised by**:
comprising a fume extractor attachment (102) according to any preceding claim.

11. The fume extractor system (103) as defined in claim 10 in combination with a welding torch, wherein the welding torch is configured to be connected to a robotic welding arm.

12. The fume extractor system (103) and the welding torch defined in claim 11, wherein the robotic welding torch is configured to be connected to one or more weld cables to deliver welding consumables from a welding power supply.

13. The fume extractor system (103) as defined in claim 10, further comprising a hose support to hold the fume hose, and optionally
wherein the hose support is configured to move in at least one direction in response to movement of the fume hose.

14. The fume extractor attachment (102) as defined in claim 10, further comprising a grommet configured to be arranged between the fume extractor attachment (102) and the neck (110) of the welding torch to partially seal a space between the fume extractor attachment (102) and the neck (110).

## Patentansprüche

1. Rauchabsaugeraufsatz (102) für einen Schweißbrenner (104), wobei der Rauchabsaugeraufsatz (102) Folgendes umfasst:
einen Körper, der einen Halskanal (132) zur Aufnahme eines Halses (110) eines Metallinertgas-Schweißbrenners beinhaltet;
eine Vielzahl von Rauchschlitzen (124), die an einem ersten Ende des Körpers angeordnet sind;
eine Rauchrohrleitungsaufnahme, die an einem zweiten Ende des Körpers gegenüber dem ersten Ende angeordnet ist; und
einen Rauchverteiler (134), der eine Fluidverbindung zwischen dem einen oder den mehreren Rauchschlitzen (124) und der Rauchrohrleitungsaufnahme bereitstellt, wobei die Rauchrohrleitungsaufnahme mit einem Rauchschlauch koppelbar ist;
**dadurch gekennzeichnet, dass** der Kanal (132) eine oder mehrere Krümmungen aufweist.

2. Rauchabsaugeraufsatz (102) nach Anspruch 1, wobei die Vielzahl von Rauchschlitzen (124) in einem konischen Abschnitt ausgebildet sind, der sich von dem Körper zu einer Düse (118) des Schweißbrenners erstreckt.

3. Rauchabsaugeraufsatz (102) nach Anspruch 2, wobei die Vielzahl von Rauchschlitzen (124) radial um den Kanal (132) herum angeordnet sind.

4. Rauchabsaugeraufsatz (102) nach Anspruch 2, wobei sich der Kanal (132) von dem konischen Abschnitt zu einer Öffnung erstreckt, die dazu eingerichtet ist, den Hals (110) des Schweißbrenners aufzunehmen.

5. Rauchabsaugeraufsatz (102) nach Anspruch 2, wobei sich der Verteiler (134) in einen Raum innerhalb des Körpers und des konischen Abschnitts erstreckt, der den Kanal (132) umgibt.

6. Rauchabsaugeraufsatz (102) nach Anspruch 1, wobei der Kanal (132) gegenüber dem Rauchverteiler (134) fluidisch abgedichtet ist.

7. Rauchabsaugeraufsatz (102) nach Anspruch 1, wobei der Rauchverteiler (134) ein Material mit einem Schmelzpunkt oberhalb einer vorbestimmten Schwellentemperatur umfasst, und optional
wobei das Material eines oder mehrere von einem Metall, einem Polymer, Polyetheretherketon (PEEK), Polyimid oder Silikon umfasst.

8. Rauchabsaugeraufsatz (102) nach Anspruch 1, wobei der Aufsatz als eine einzelne Einheit ausgebildet ist, oder
wobei der Körper zwei oder mehr Teile umfasst, die dazu eingerichtet sind, aneinander befestigt zu werden, um an den Hals (110) des Schweißbrenners angeklemmt zu werden.

9. Rauchabsaugeraufsatz (102) nach Anspruch 1, der ferner ein oder mehrere Befestigungselemente zum Fixieren einer Position oder Ausrichtung des Rauchabsaugeraufsatzes (102) in Bezug auf den Schweißbrenner umfasst, oder
wobei der Rauchabsaugeraufsatz (102) ferner einen Isolator zwischen einer oder mehreren Oberflächen des Rauchabsaugeraufsatzes (102) und dem Hals (110) des Schweißbrenners umfasst.

10. Rauchabsaugersystem (103) für einen Schweißbrenner (104), umfassend:
ein Vakuumsystem;
einen Rauchschlauch, der mit dem Vakuumsystem verbunden ist; und
wobei das Rauchabsaugersystem **dadurch gekennzeichnet ist, dass** es:
einen Rauchabsaugeraufsatz (102) nach einem der vorhergehenden Ansprüche umfasst.

11. Rauchabsaugersystem (103) nach Anspruch 10 in Kombination mit einem Schweißbrenner, wobei der Schweißbrenner dazu eingerichtet ist, mit einem Roboterschweißarm verbunden zu werden.

12. Rauchabsaugersystem (103) und Schweißbrenner nach Anspruch 11, wobei der Roboterschweißbrenner dazu eingerichtet ist, mit einem oder mehreren Schweißkabeln verbunden zu werden, um Schweißverbrauchsmaterial von einer Schweißstromversorgung zu liefern.

13. Rauchabsaugersystem (103) nach Anspruch 10, das ferner eine Schlauchhalterung zum Halten des Rauchschlauchs umfasst, und optional
wobei die Schlauchhalterung dazu eingerichtet ist, sich in Reaktion auf eine Bewegung des Rauchschlauchs in mindestens einer Richtung zu bewegen.

14. Rauchabsaugeraufsatz (102) nach Anspruch 10, der ferner eine Tülle umfasst, die dazu eingerichtet ist, zwischen dem Rauchabsaugeraufsatz (102) und dem Hals (110) des Schweißbrenners angeordnet zu werden, um einen Raum zwischen dem Rauchabsaugeraufsatz (102) und dem Hals (110) teilweise abzudichten.

## Revendications

1. Accessoire d'extracteur de fumée (102) pour une torche de soudage (104), l'accessoire d'extracteur de fumée (102) comprenant :
un corps comprenant un canal de col (132) pour recevoir un col (110) d'un chalumeau de soudage à gaz inerte métallique ;
une pluralité de fentes de fumée (124) agencées à une première extrémité du corps ;
un récepteur de conduit de fumée agencé au niveau d'une deuxième extrémité du corps opposée à la première extrémité ; et
un collecteur de fumées (134) fournissant une communication de fluide entre la ou les fentes de fumée (124) et le récepteur de conduit de fumée, le récepteur de conduit de fumée pouvant être couplé à un tuyau de fumée ;
**caractérisé en ce que** le canal (132) a une ou plusieurs courbes.

2. Accessoire d'extracteur de fumée (102) selon la revendication 1, dans lequel la pluralité de fentes de fumée (124) sont formées dans une partie conique s'étendant depuis le corps vers une buse (118) du chalumeau de soudage.

3. Accessoire d'extracteur de fumée (102) selon la revendication 2, dans lequel la pluralité de fentes de fumée (124) sont agencées radialement autour du canal (132).

4. Accessoire d'extracteur de fumée (102) selon la revendication 2, dans lequel le canal (132) s'étend depuis la partie conique jusqu'à une ouverture configurée pour recevoir le col (110) du chalumeau de soudage.

5. Accessoire d'extracteur de fumée (102) selon la revendication 2, dans lequel le collecteur (134) s'étend dans un espace à l'intérieur du corps et de la partie conique qui entoure le canal (132).

6. Accessoire d'extracteur de fumée (102) selon la revendication 1, dans lequel le canal (132) est isolé de manière étanche aux fluides du collecteur (134) de fumée.

7. Accessoire d'extracteur de fumée (102) selon la revendication 1, dans lequel le collecteur (134) de fumée comprend un matériau ayant un point de fusion supérieur à une température de seuil prédéterminée, et facultativement
dans lequel le matériau comprend un ou plusieurs éléments parmi un métal, un polymère, une polyétheréthercétone (PEEK), un polyimide ou une silicone.

8. Accessoire d'extracteur de fumée (102) selon la revendication 1, dans lequel l'accessoire est formé en une seule unité, ou
dans lequel le corps comprend deux pièces ou plus configurées pour être fixées ensemble pour se fixer sur le col (110) du chalumeau de soudage.

9. Accessoire d'extracteur de fumée (102) selon la revendication 1, comprenant en outre une ou plusieurs fixations pour fixer une position ou une orientation de l'accessoire d'extracteur de fumée (102) par rapport au chalumeau de soudage, ou
l'accessoire d'extracteur de fumée (102) comprenant en outre un isolant entre une ou plusieurs surfaces de l'accessoire d'extracteur de fumée (102) et le col (110) du chalumeau de soudage.

10. Système d'extracteur de fumée (103) pour un chalumeau de soudage (104) comprenant :
un système à vide ;
un tuyau de fumée connecté au système de vide ; et
le système d'extracteur de fumée étant **caractérisé par** :
comprenant
un accessoire d'extracteur de fumée (102) selon l'une quelconque des revendications précédentes.

11. Système d'extraction de fumée (103) selon la revendication 10 en combinaison avec un chalumeau de soudage, dans lequel le chalumeau de soudage est configuré pour être connecté à un bras de soudage robotisé.

12. Système d'extraction de fumée (103) et chalumeau de soudage selon la revendication 11, dans lesquels le chalumeau de soudage robotisé est configuré pour être connecté à un ou plusieurs câbles de soudage pour délivrer des consommables de soudage à partir d'une alimentation électrique de soudage.

13. Système d'extraction de fumée (103) selon la revendication 10, comprenant en outre un support de tuyau pour maintenir le tuyau de fumée, et facultativement
dans lequel le support de tuyau est configuré pour se déplacer dans l'au moins une direction en réponse au mouvement du tuyau de fumée.

14. Accessoire d'extracteur de fumée (102) selon la revendication 10, comprenant en outre un manchon configuré pour être agencé entre l'accessoire d'extracteur de fumée (102) et le col (110) du chalumeau de soudage pour sceller partiellement un espace entre l'accessoire d'extracteur de fumée (102) et le col (110).
